# EUROPÄISCHE PATENTSCHRIFT

(11) **EP 3 345 722 B1**
(45) Veröffentlichungstag und Bekanntmachung des Hinweises auf die Patenterteilung: **15.06.2022**
(21) Anmeldenummer: 17150787.4
(22) Anmeldetag: 10.01.2017
(51) Int. Cl.: B23Q 11/08, A61C 13/00

(54) **DENTALBEARBEITUNGSMASCHINE MIT EINEM FRÄSRAUM**
DENTAL PROCESSING MACHINE WITH A MILLING AREA
MACHINE D'USINAGE DENTAIRE COMPRENANT UN COMPARTIMENT DE FRAISAGE

(43) Veröffentlichungstag der Anmeldung: 11.07.2018
(73) Patentinhaber: Huber, Martin, 5452 Pfarrwerfen (AT); Wörmer, Alfons, 5500 Bischofshofen (AT)
(72) Erfinder: Huber, Martin, 5452 Pfarrwerfen (AT); Wörmer, Alfons, 5500 Bischofshofen (AT)
(74) Vertreter: Baronetzky, Klaus

(56) Entgegenhaltungen:
- EP-A1- 3 012 065
- EP-A1- 3 081 331
- CN-A- 105 832 436

## Beschreibung

Die Erfindung betrifft eine Dentalbearbeitungsmaschine mit einem Fräsraum.

### Stand der Technik

Bekannte Werkzeugmaschinen zur spanabhebenden Bearbeitung von Werkstücken weisen in der Regel mit Bezug auf die Erfordernisse des Dentalbereich zu große Abmessungen auf. Speziell im Dentalbereich im Rahmen von Dentalbearbeitungsmaschinen sind kompakte Abmessungen von Vorteil. Des Weiteren ist eine möglichst hohe räumliche Bewegbarkeit eines Bearbeitungswerkzeugs sowie eine Abdichtung einer Bearbeitungskammer gegenüber einer Umgebung bei gleichzeitiger Zugänglichkeit der Bearbeitungskammer z.B. zum Werkzeug- oder Werkstückwechsel erforderlich.

Die DE 197 32 608 B4 offenbart eine Werkzeugmaschine zur spanenden Bearbeitung eines Werkstücks, das unmittelbar oder mittelbar auf einem Werkstückträger aufgespannt ist, der verschiebbar auf einem Maschinenbett geführt und von einer einen Arbeitsraum begrenzenden Bearbeitungskammer umgeben ist, aus der heraus Späne mittels einer Spanabführeinrichtung herausführbar sind, wobei Führungen des Werkstückträgers außerhalb der Bearbeitungskammer angeordnet sind.

Die EP 3 081 331 A1 und die CN 105832436 A offenbaren Dentalbearbeitungsmaschinen, wobei der Bearbeitungsraum zumindest teilweise mittels einer Membran abgedichtet ist.

Der Erfindung liegt somit die Aufgabe zugrunde, eine verbesserte

Dentalbearbeitungsmaschine mit einem Fräsraum anzugeben, welche eine verbesserte Abdichtung des Fräsraums gegenüber einer Umgebung bei gleichzeitig verbesserter Bewegbarkeit eines Bearbeitungswerkzeugs und verbesserter Zugänglichkeit des Fräsraums ermöglicht.

Die Aufgabe wird mit einer Dentalbearbeitungsmaschine mit den Merkmalen des Patentanspruchs 1 gelöst. Vorteilhafte Weiterbildungen ergeben sich aus den Unteransprüchen.

### Offenbarung der Erfindung

Die vorliegende Erfindung schafft eine Dentalbearbeitungsmaschine mit einem Fräsraum, welcher mindestens eine abgedichtete Tür aufweist und gegenüber der Umgebung gegen das Austreten von Flüssigkeit abgedichtet ist, wobei der Fräsraum eine Flüssigkeits-Zuleitung, insbesondere eine Düse, und einen Flüssigkeitsauslass aufweist und wobei über die Flüssigkeits-Zuleitung, insbesondere die Düse, Flüssigkeit einem Arbeitsbereich der Dentalbearbeitungsmaschine, an welchem ein Fräswerkzeug ein Werkstück bearbeitet, zuleitbar ist, und wobei das Werkstück an einem Werkstückarm in mindestens zwei Raumrichtungen verfahrbar gelagert ist, dadurch gekennzeichnet, dass der Werkstückarm einen Bewegungsflansch durchtritt, an welchem der Werkstückarm durch eine Durchtrittswand des Fräsraums hindurchtritt und dass die Durchtrittswand eine Membran aufweist, die eine Bewegung des Werkstückarms in mindestens zwei Raumrichtungen erlaubt und aus einem hochelastischen Material besteht sowie insbesondere Wellungen aufweist.

Eine Idee der vorliegenden Erfindung ist es, durch Bereitstellen der Membran in der Durchtrittswand des Fräsraums eine verbesserte Abdichtung des Fräsraums gegenüber der Umgebung der Dentalbearbeitungsmaschine sowie eine gute räumliche Positionierbarkeit des Werkstückarms im Fräsraum zu ermöglichen.

Gemäß einer bevorzugten Weiterbildung ist vorgesehen, dass die Wellungen als konzentrische Kreise oder als konzentrische Teilkreise ausgebildet sind, die im Querschnitt betrachtet im Wesentlichen Sinuskurven bilden. Somit ist in vorteilhafter Weise eine gute Verfahrbarkeit des Werkstückarms in allen drei Raumachsen relativ zur Membran möglich.

Gemäß einer weiteren bevorzugten Weiterbildung ist vorgesehen, dass mindestens zwei und höchstens zwanzig Wellungen der Membran sich, betrachtet aus Richtung des Bewegungsflansches, radial nach außen erstreckend verlaufen. Die Wellungen der Membran können somit an eine jeweilige Größe des Fräsraums bzw. an ein Erfordernis einer Bewegbarkeit bzw. Auslenkbarkeit des Werkstückarms angepasst werden.

Erfindungsgemäß ist die Membran an der Durchtrittswand des Fräsraums mit einem Anschlussflansch, der umlaufend ausgebildet ist, abgedichtet eingespannt gehalten. Somit kann die Membran in vorteilhafter Weise ihre Abdichtfunktion erfüllen und muss in Randbereichen somit keine speziellen Anforderungen hinsichtlich Befestigbarkeit bzw. Reißfestigkeit erfüllen, da der Anschlussflansch auf diese Anforderungen abgestimmt ist.

Gemäß einer weiteren bevorzugten Weiterbildung ist vorgesehen, dass der Bewegungsflansch des Werkstückarms an einem starren Teilarm des Werkstückarms ausgebildet ist, der die Membran durchtritt. Somit kann in vorteilhafter Weise eine gute Positionierbarkeit des Werkstückarms relativ zur Membran gewährleistet werden.

Gemäß einer weiteren bevorzugten Weiterbildung ist vorgesehen, dass der Werkstückarm jenseits der Durchtrittswand, also außerhalb des Fräsraums, Bewegungselemente in drei Raumrichtungen, entsprechend den Achsen X, Y, Z und zwei Rotationsachsen für die Drehung eines Werkzeug-Spannfutters oder einer Spannzange für das Werkstück, ggf. gemeinsam mit dem darin eingespannten Werkstück aufweist. Die Bewegungselemente ermöglichen somit in vorteilhafter Weise eine Bewegung des Werkstückarms in den oben genannten fünf Achsen.

Gemäß einer weiteren bevorzugten Weiterbildung ist vorgesehen, dass eine Frässpindel in dem Fräsraum vorgesehen ist, die ortsfest angeordnet ist und ein Werkzeug-Spannfutter trägt, das in an sich bekannter Weise ein Fräswerkzeug eingespannt trägt, welche Frässpindel insbesondere an der Bodenwand des Fräsraums befestigt ist. Aufgrund der Befestigung der Frässpindel an der Bodenwand des Fräsraums kann das Fräswerkzeug relativ zur Frässpindel im Fräsraum exakt positioniert werden, um einen gewünschten Materialabtrag des Werkstücks zu ermöglichen.

Gemäß einer weiteren bevorzugten Weiterbildung ist vorgesehen, dass die Flüssigkeits-Zuleitung eine Düse ist, die in Ausströmrichtung parallel zur Erstreckung der Membran angeordnet ist. Somit kann aus der Düse ausströmende Flüssigkeit in vorteilhafter Weise nicht direkt auf die Membran auftreffen. Dadurch kann eine verbesserte Dichtigkeit des Fräsraums ermöglicht werden.

Gemäß einer weiteren bevorzugten Weiterbildung ist vorgesehen, dass die Flüssigkeits-Zuleitung mehrere Düsen aufweist, deren Ausströmrichtung im Wesentlichen parallel ist und dass die Flüssigkeit dem Bearbeitungsbereich zugeleitet wird und dort auf das Fräswerkzeug und/oder das Werkstück während der Bearbeitung trifft, bevor die Flüssigkeit zur Membran gelangen kann. Somit wird die Flüssigkeit bevorzugt dem Bearbeitungsbereich bzw. dem Fräswerkzeug zugeleitet und gelangt lediglich indirekt zur Membran.

Gemäß einer weiteren bevorzugten Weiterbildung ist vorgesehen, dass eine Frässpindel vorgesehen ist, die ein Spannfutter für ein Fräswerkzeug trägt, wobei das Spannfutter mindestens eine Düse für die Flüssigkeits-Zuleitung in den Fräsraum trägt, die sich mit dem Spannfutter dreht. Die Integration der Düse in das Spannfutter ermöglicht somit in vorteilhafter Weise eine sehr kompakte Ausführung der Flüssigkeits-Zuleitung bei gleichzeitig präziser Anströmung des Werkzeugs.

Gemäß einer weiteren bevorzugten Weiterbildung ist vorgesehen, dass mehrere Düsen an dem Spannfutter um das Fräswerkzeug gleichmäßig verteilt angeordnet sind, deren Ausströmrichtungen sich im Wesentlichen parallel zum Fräswerkzeug erstrecken oder auf die Spitze des Fräswerkzeugs gerichtet sind. Somit kann eine gleichmäßige Anströmung des Fräswerkzeugs mit Flüssigkeit ermöglicht werden.

Gemäß einer weiteren bevorzugten Weiterbildung ist vorgesehen, dass die abgedichtete Tür an einer Wandfläche des Fräsraums, vorzugsweise an einer Deckenwand des Fräsraums, angeordnet ist, wobei die abgedichtete Tür dazu ausgebildet ist, dass mittels eines jenseits der Wandfläche des Fräsraums, also außerhalb des Fräsraums angeordneten Werkzeugwechslers in geöffnetem Zustand der Tür ein Wechsel des Fräswerkzeugs durchführbar ist. Somit kann der Werkzeugwechsler in vorteilhafter Weise außerhalb des Fräsraums der Dentalbearbeitungsmaschine angeordnet werden.

Gemäß einer weiteren bevorzugten Weiterbildung ist vorgesehen, dass die abgedichtete Tür ein an der Wandfläche des Fräsraums, vorzugsweise an der Deckenwand des Fräsraums, angeordnetes plattenförmiges Element aufweist, wobei das plattenförmige Element eine in der Wandfläche des Fräsraums, vorzugsweise in der Deckenwand des Fräsraums, ausgebildete Öffnung im geschlossenen Zustand der Tür überdeckt, wobei die Öffnung und/ oder die Tür zumindest ein Abdichtelement aufweist. Somit kann in vorteilhafter Weise eine konstruktiv einfache Tür bzw. Abdeckung bereitgestellt werden, welche zudem eine gute Abdichtung des Fräsraums gegenüber einer Umgebung ermöglicht.

Gemäß einer weiteren bevorzugten Weiterbildung ist vorgesehen, dass die Tür derart ansteuerbar ist, dass die Tür bei Betätigung des Werkzeugwechslers öffenbar und nach Durchführung des Wechsels des Fräswerkzeugs schließbar ist. Die Tür wird somit in vorteilhafter Weise nur im Bedarfsfall geöffnet. Das Öffnen und Schließen der Tür erfolgt vorzugsweise automatisch ohne Zutun eines Benutzers der Dentalbearbeitungsmaschine, wodurch ein Aufwand beim Wechsel des Fräswerkzeugs reduziert wird.

Gemäß einer weiteren bevorzugten Weiterbildung ist vorgesehen, dass die Membran zumindest abschnittsweise teilkreisförmig ausgebildet ist, wobei die Membran einen teilkreisförmig ausgebildeten ersten Abschnitt, einen zu einem ersten axialen Endabschnitt des teilkreisförmig ausgebildeten ersten Abschnitts der Membran benachbart angeordneten, im Wesentlichen geradlinig ausgebildeten zweiten Abschnitt, und einen zu einem zweiten axialen Endabschnitt des teilkreisförmig ausgebildeten ersten Abschnitts der Membran benachbart angeordneten, im Wesentlichen geradlinig ausgebildeten dritten Abschnitt aufweist.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine schematische Darstellung einer Dentalbearbeitungsmaschine gemäß einer bevorzugten Ausführungsform der Erfindung;
- Fig. 2: eine weitere schematische Darstellung der Dentalbearbeitungsmaschine gemäß der bevorzugten Ausführungsform der Erfindung;
- Fig. 3: eine Querschnittsansicht eines Fräsraums der Dentalbearbeitungsmaschine gemäß der bevorzugten Ausführungsform der Erfindung;
- Fig. 4: eine vergrößerte Darstellung einer Deckenwand des Fräsraums der Dentalbearbeitungsmaschine mit geschlossener Tür gemäß der bevorzugten Ausführungsform der Erfindung; und
- Fig. 5: eine vergrößerte Darstellung der Deckenwand des Fräsraums der Dentalbearbeitungsmaschine mit geöffneter Tür gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

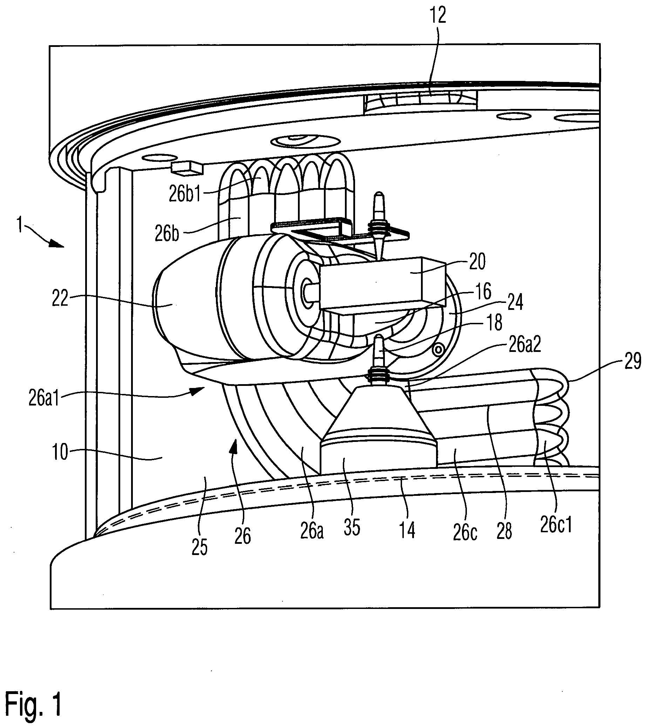

Fig. 1 zeigt eine schematische Darstellung einer Dentalbearbeitungsmaschine gemäß einer bevorzugten Ausführungsform der Erfindung.

Die Dentalbearbeitungsmaschine 1 weist einen Fräsraum 10 auf. Der Fräsraum 10 weist eine abgedichtete Tür 12 auf, welche gegenüber der Umgebung 13 der Dentalbearbeitungsmaschine 1 gegen das Austreten von Flüssigkeit abgedichtet ist. Der Fräsraum 10 weist eine Flüssigkeits-Zuleitung 14 auf. Die Flüssigkeits-Zuleitung 14 ist vorzugsweise in Form einer Düse ausgebildet. Der Fräsraum 10 weist des Weiteren einen (in Fig. 1 nicht gezeigten) Flüssigkeitsauslass auf. Über die Flüssigkeits-Zuleitung 14 wird Flüssigkeit einem Arbeitsbereich 16 der Dentalbearbeitungsmaschine 1, an welchem ein Fräswerkzeug 18 ein Werkzeug 20 bearbeitet, zugeleitet.

Das Werkstück 20 ist an einem Werkstückarm 22 in zumindest zwei Raumrichtungen verfahrbar gelagert. Der Werkstückarm 22 durchtritt einen Bewegungsflansch 24, an welchem der Werkstückarm 22 durch eine Durchtrittswand 25 des Fräsraums 10 hindurchtritt. Die Durchtrittswand 25 weist eine Membran 26 auf, die eine Bewegung des Werkstückarms 22 in mindestens zwei Raumrichtungen erlaubt und aus einem hochelastischen Material besteht. Des Weiteren weist die Membran 26 Wellungen 28 auf. Die Wellungen 28 erstecken sich im Wesentlichen quer zu einer Axialrichtung der Membran 16.

Die Membran ist vorzugsweise aus einem elastomerischen Polyurethan ausgebildet, insbesondere vorzugsweise aus dem Material EHP 40 A Polyol. Vorstehend genanntes Material weist eine gute Flexibilität bei gleichzeitig hoher Reißfestigkeit auf.

Die Membran 26 ist vorzugsweise abschnittsweise teilkreisförmig ausgebildet. Die Membran 26 weist vorzugsweise einen teilkreisförmig ausgebildeten ersten Abschnitt 26a, einen zu einem ersten axialen Endabschnitt 26a1 des teilkreisförmig ausgebildeten ersten Abschnitts 26a der Membran 26 benachbart angeordneten, im Wesentlichen geradlinig ausgebildeten zweiten Abschnitt 26b, und einen zu einem zweiten axialen Endabschnitt 26a2 des teilkreisförmig ausgebildeten ersten Abschnitts 26a der Membran 26 benachbart angeordneten, im Wesentlichen geradlinig ausgebildeten dritten Abschnitt 26c auf.

Ein axialer Endabschnitt 26c1 des im Wesentlichen geradlinig ausgebildeten dritten Abschnitts 26c und ein axialer Endabschnitt 26b1 des im Wesentlichen geradlinig ausgebildeten zweiten Abschnitts 26b, welche jeweilige axialen Endabschnitte der Membran 26 bilden, sind jeweils abgerundet, wobei jede der Wellungen 28 einen abgerundeten Endabschnitt aufweist.

Die Wellungen 28 sind vorzugsweise als konzentrische Kreise ausgebildet, die im Querschnitt betrachtet im Wesentlichen Sinuskurven bilden. Alternativ zum Vorsehen der Wellungen in Form von konzentrischen Kreisen können diese beispielsweise in Form von teilkonzentrischen Kreisen ausgebildet sein.

Vorzugsweise sind mindestens zwei und höchstens 20 Wellungen 28 der Membran 26 vorgesehen. Die Wellungen verlaufen vorzugsweise betrachtet aus Richtung des Bewegungsflansches 24 radial nach außen erstreckend. Des Weiteren ist die Membran 26 eine Durchtrittswand 25 des Fräsraums 10 mit einem Anschlussflansch 29 versehen, der umlaufend ausgebildet ist. Die Membran 26 wird durch den Anschlussflansch 29 abgedichtet eingespannt gehalten.

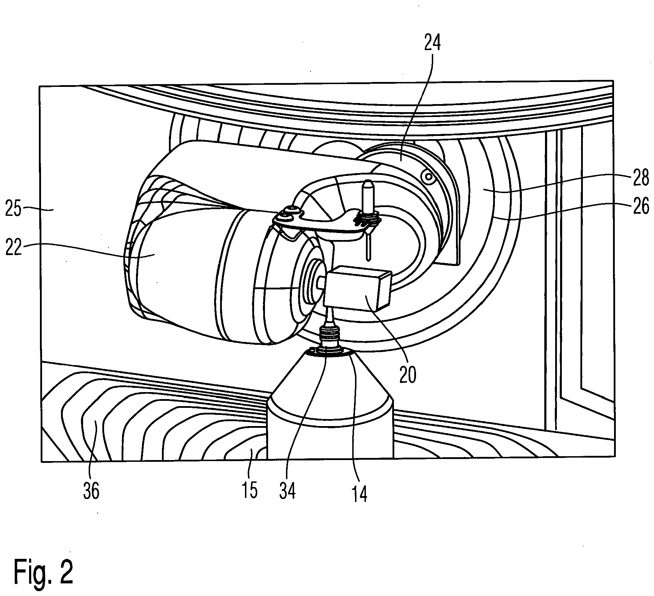

Fig. 2 zeigt eine weitere schematische Darstellung der Dentalbearbeitungsmaschine gemäß der bevorzugten Ausführungsform der Erfindung.

Die Flüssigkeits-Zuleitung 14 ist vorzugsweise als Düse ausgebildet. Die Düse ist in Ausströmrichtung parallel zur Erstreckung der Membran 26 angeordnet.

Die Düsen werden vorzugsweise durch eine Düsenklappe gebildet, die im Winkel von im Wesentlichen 10 bis 30°, vorzugsweise 20°, einwärts, d.h. in Richtung des Bearbeitungswerkzeugs, gerichtet sind. Ein Düsenstrom trifft auf das Fräs- bzw. Bearbeitungswerkzeug und gleitet weiter nach vorne zur Bearbeitungsfläche.

Der Flüssigkeitsauslass 15 ist vorzugsweise an einer Bodenwand 36 des Fräsraums 10 angeordnet, insbesondere vorzugsweise an einer tiefsten Stelle des Fräsraums 10, um einen Ablauf der Flüssigkeit zu begünstigen.

Die Flüssigkeits-Zuleitung 14 weist vorzugsweise mehrere Düsen auf, deren Ausströmrichtung im Wesentlichen parallel ist. Die Flüssigkeit wird dadurch dem Bearbeitungsbereich zugeleitet und trifft dort auf das Fräswerkzeug 18 und/oder das Werkstück 20 auf, bevor die Flüssigkeit zur Membran 26 gelangen kann. Die Flüssigkeits-Zuleitung 14 ist vorzugsweise in ein Spannfutter 34 des Fräswerkzeugs 18 integriert.

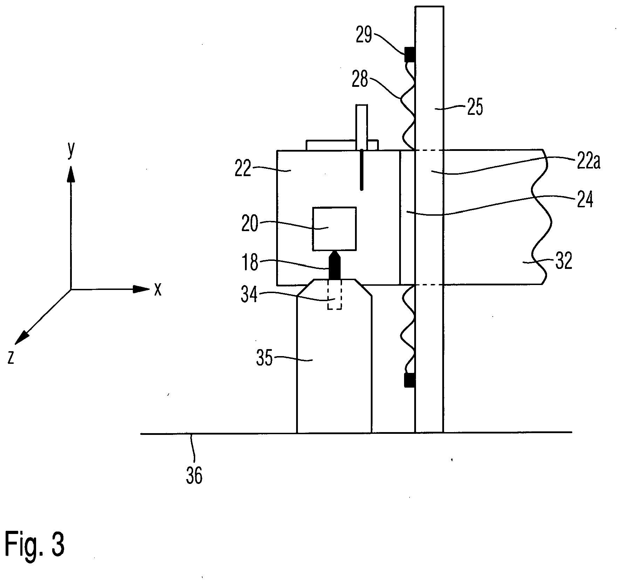

Fig. 3 zeigt eine Querschnittsansicht eines Fräsraums der Dentalbearbeitungsmaschine gemäß der bevorzugten Ausführungsform der Erfindung.

Der Bewegungsflansch 24 des Werkstückarms 22 ist vorzugsweise an einem starren Teilarm 22a des Werkstückarms 22 ausgebildet, der die Membran 26 durchtritt. Der Teilarm 22a des Werkstückarms 22 kann eine beliebige geeignete Form aufweisen.

Der Werkstückarm 22 weist jenseits der Durchtrittswand 25, also außerhalb des Fräsraums 10, Bewegungselemente 32 auf, welche sich in drei Raumrichtungen erstrecken. Die Formgebung der Bewegungselemente 32 ist nicht näher dargestellt. Die Bewegungselemente 32 erstrecken sich entsprechend den Achsen X, Y, Z und zwei Rotationsachsen für die Drehung eines Werkzeug-Spannfutters 34 oder einer Spannzange für das Werkstück 20.

In dem Fräsraum 10 ist eine Frässpindel 35 vorgesehen, die ortsfest angeordnet ist. Die Frässpindel 35 trägt ein Werkzeug-Spannfutter 34. Das Werkstück-Spannfutter 34 trägt ein Fräswerkzeug 18. Die Frässpindel 35 ist vorzugsweise an der Bodenwand 36 des Fräsraums 10 befestigt. Alternativ ist auch eine Befestigung der Frässpindel an einer anderen geeigneten Wand des Fräsraums 10 möglich.

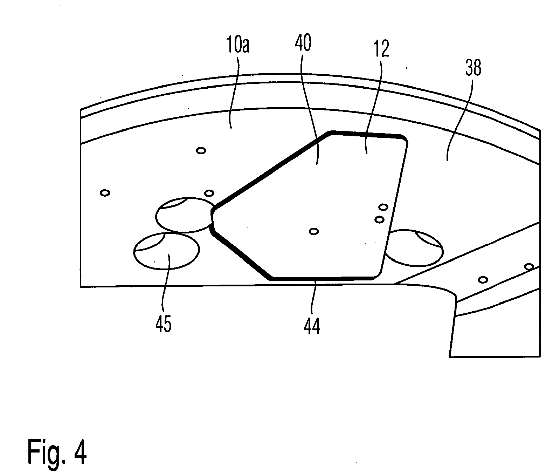

Fig. 4 zeigt eine vergrößerte Darstellung einer Deckenwand des Fräsraums der Dentalbearbeitungsmaschine mit geschlossener Tür gemäß der bevorzugten Ausführungsform der Erfindung.

Die abgedichtete Tür 12 der Dentalbearbeitungsmaschine 1 ist vorzugsweise an einer Wandfläche 10a des Fräsraums 10, vorzugsweise an einer Deckenwand 38 des Fräsraums 10, angeordnet.

Die abgedichtete Tür weist vorzugsweise ein an der Deckenwand 38 des Fräsraums 10 angeordnetes plattenförmiges Element 40 auf. Das plattenförmige Element 40 überdeckt eine in der Wandfläche 10a des Fräsraums 10, vorzugsweise der Deckenwand 38 des Fräsraums 10, ausgebildete Öffnung 42 in geschlossenem Zustand der Tür 12. Alternativ kann die Tür beispielsweise in der (in Fig. 4 nicht gezeigten) Öffnung versenkbar ausgebildet sein.

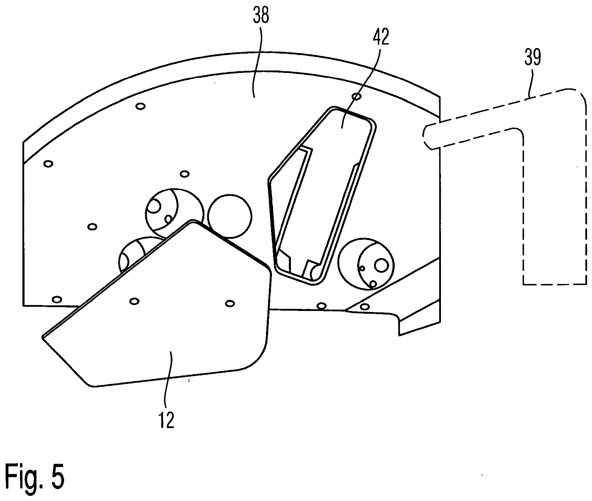

Fig. 5 zeigt eine vergrößerte Darstellung der Deckenwand des Fräsraums der Dentalbearbeitungsmaschine mit geöffneter Tür gemäß der bevorzugten Ausführungsform der Erfindung.

Die abgedichtete Tür 12 ist vorzugsweise dazu ausgebildet, dass mittels eines jenseits der Wandfläche 10a des Fräsraums 10, also außerhalb des Fräsraums 10, angeordneten Werkzeugwechslers 39 in geöffnetem Zustand der Tür 12 ein Wechsel des (in Fig. 5 nicht gezeigten) Fräswerkzeugs durchführbar ist. In Fig. 5 ist die Tür 12 in geöffnetem Zustand gezeigt. Die Tür 12 ist vorzugsweise derart ansteuerbar, dass die Tür 12 bei Betätigung des Werkzeugwechslers 39 geöffnet und nach Durchführung des Wechsels des (in Fig. 5 nicht gezeigten) Fräswerkzeugs geschlossen wird.

## Patentansprüche

1. Dentalbearbeitungsmaschine (1) mit einem Werkstückarm (22) und mit einem Fräsraum (10), welcher mindestens eine abgedichtete Tür (12) aufweist und gegenüber der Umgebung (13) gegen das Austreten von Flüssigkeit abgedichtet ist, wobei der Fräsraum (10) eine Durchtrittswand (25) und eine Flüssigkeits-Zuleitung (14), insbesondere eine Düse, und einen Flüssigkeitsauslass (15) aufweist und wobei über die Flüssigkeits-Zuleitung (14), insbesondere die Düse, Flüssigkeit einem Arbeitsbereich (16) der Dentalbearbeitungsmaschine (1), an welchem ein Fräswerkzeug (18) ein Werkstück (20) bearbeitet, zuleitbar ist, und wobei das Werkstück (20) an dem Werkstückarm (22) in mindestens zwei Raumrichtungen verfahrbar gelagert werden kann, wobei der Werkstückarm (22) einen Bewegungsflansch (24) durchtritt, an welchem der Werkstückarm (22) durch die Durchtrittswand (25) des Fräsraums (10) hihdurchtritt und wobei die Durchtrittswand (25) eine Membran (26) aufweist, die eine Bewegung des Werkstückarms (22) in mindestens zwei Raumrichtungen erlaubt und aus einem hochelastischen Material besteht, wobei die Membran (26) an der Durchtrittswand (25) des Fräsraums (10) mit einem Anschlussflansch (29), der umlaufend ausgebildet ist, abgedichtet eingespannt gehalten ist.

2. Dentalbearbeitungsmaschine nach Anspruch 1, **dadurch gekennzeichnet, dass** die Membran (26) Wellungen (28) aufweist, wobei die Wellungen (28) als konzentrische Kreise oder als konzentrische Teilkreise ausgebildet sind, die im Querschnitt betrachtet im Wesentlichen Sinuskurven bilden.

3. Dentalbearbeitungsmaschine nach Anspruch 2, **dadurch gekennzeichnet, dass** mindestens zwei und höchstens zwanzig Wellungen (28) der Membran (26) sich, betrachtet aus Richtung des Bewegungsflansches (24), radial nach außen erstreckend verlaufen.

4. Dentalbearbeitungsmaschine nach einem der vorhergehenden Ansprüche, **dadurch gekennzeichnet, dass** der Bewegungsflansch (24) des Werkstückarms (22) an einem starren Teilarm (22a) des Werkstückarms (22) ausgebildet ist, der die Membran (26) durchtritt.

5. Dentalbearbeitungsmaschine nach einem der vorhergehenden Ansprüche, **dadurch gekennzeichnet, dass** der Werkstückarm (22) jenseits der Durchtrittswand (25), also außerhalb des Fräsraums (10), Bewegungselemente (32) in drei Raumrichtungen, entsprechend den Achsen X, Y, Z und zwei Rotationsachsen für die Drehung eines Werkzeug-Spannfutters (34) oder einer Spannzange für das Werkstück (20), gegebenenfalls gemeinsam mit dem darin eingespannten Werkstück (20) aufweist.

6. Dentalbearbeitungsmaschine nach einem der vorhergehenden Ansprüche, **dadurch gekennzeichnet, dass** eine Frässpindel (35) in dem Fräsraum (10) vorgesehen ist, die ortsfest angeordnet ist und ein Werkzeug-Spannfutter (34) trägt, dass in an sich bekannter Weise ein Fräswerkzeug (18) eingespannt trägt, welche Frässpindel (35) insbesondere an der Bodenwand (36) des Fräsraums (10) befestigt ist.

7. Dentalbearbeitungsmaschine nach einem der vorhergehenden Ansprüche, **dadurch gekennzeichnet, dass** die Flüssigkeits-Zuleitung (14) mindestens eine Düse aufweist, die in Ausströmrichtung schräg zur Erstreckung der Membran (26) angeordnet ist.

8. Dentalbearbeitungsmaschine nach einem der vorhergehenden Ansprüche, **dadurch gekennzeichnet, dass** die Flüssigkeits-Zuleitung (14) mehrere Düsen aufweist, deren Ausströmrichtungen im Wesentlichen parallel zueinander sind und insbesondere konvergieren und dass die Flüssigkeit dem Bearbeitungsbereich zugeleitet wird und dort auf das Fräswerkzeug (18) und/oder das Werkstück (20) während der Bearbeitung trifft, bevor die Flüssigkeit zur Membran (26) gelangen kann.

9. Dentalbearbeitungsmaschine nach einem der vorhergehenden Ansprüche, **dadurch gekennzeichnet, dass** eine Frässpindel (35) vorgesehen ist, die ein Spannfutter (34) für ein Fräswerkzeug (18) trägt, und dass eine mit der Dentalbearbeitungsmaschine verbdundene Düsenplatte mindestens eine Düse für die Flüssigkeitszuleitung (14) in den Fräsraum (10) trägt, die sich mit dem Spannfutter (34) dreht.

10. Dentalbearbeitungsmaschine nach Anspruch 9, **dadurch gekennzeichnet, dass** mehrere Düsen an dem Spannfutter (34) um das Fräswerkzeug (18) gleichmäßig verteilt angeordnet sind, deren Ausströmrichtung sich im Wesentlichen parallel zum Fräswerkzeug (18) erstrecken oder auf die Spitze (18a) des Fräswerkzeugs (18) gerichtet sind.

11. Dentalbearbeitungsmaschine nach einem der vorhergehenden Ansprüche, **dadurch gekennzeichnet, dass** die abgedichtete Tür (12) an einer Wandfläche (10a) des Fräsraums (10), vorzugsweise an einer Deckenwand (38) des Fräsraums (10) angeordnet ist, wobei die abgedichtete Tür (12) dazu ausgebildet ist, dass mittels einem jenseits der Wandfläche (10a) des Fräsraums (10), also außerhalb des Fräsraums (10) angeordneten Werkzeugwechsler (39), in geöffnetem Zustand der Tür (12) ein Wechsel des Fräswerkzeugs (18) durchführbar ist.

12. Dentalbearbeitungsmaschine nach Anspruch 11, **dadurch gekennzeichnet, dass** die abgedichtete Tür (12) ein an der Wandfläche (10a) des Fräsraums (10), vorzugsweise an der Deckenwand (38) des Fräsraums (10) angeordnetes plattenförmiges Element (40) aufweist, wobei das plattenförmige Element (40) eine in der Wandfläche (10a) des Fräsraums (10), vorzugsweise in der Deckenwand (38) des Fräsraums (10) ausgebildete Öffnung (42) in geschlossenem Zustand der Tür (12) überdeckt, wobei die Öffnung (42) und/ oder die Tür (12) zumindest ein Abdichtelement (44) aufweist.

13. Dentalbearbeitungsmaschine nach Anspruch 11 oder 12, **dadurch gekennzeichnet, dass** die Tür (12) derart ansteuerbar ist, dass die Tür (12) bei Betätigung des Werkzeugwechslers (39) und/oder des Werkstückwechslers öffenbar und nach Durchführung des Wechsels des Fräswerkzeugs (18) schließbar ist.

14. Dentalbearbeitungsmaschine nach einem der vorhergehenden Ansprüche, **dadurch gekennzeichnet, dass** die Membran (26) zumindest abschnittsweise teilkreisförmig ausgebildet ist, wobei die Membran (26) einen teilkreisförmig ausgebildeten ersten Abschnitt (26a), einen zu einem ersten axialen Endabschnitt (26a1) des teilkreisförmig ausgebildeten ersten Abschnitts (26a) der Membran (26) benachbart angeordneten, im Wesentlichen geradlinig ausgebildeten zweiten Abschnitt (26b), und einen zu einem zweiten axialen Endabschnitt (26a2) des teilkreisförmig ausgebildeten ersten Abschnitts (26a) der Membran (26) benachbart angeordneten, im Wesentlichen geradlinig ausgebildeten dritten Abschnitt (26c) aufweist.

## Claims

1. A dental machine tool (1) having a workpiece arm (22) and a milling chamber (10), which has at least one sealed door (12) and is sealed from the environment (13) to prevent escape of liquid, wherein the milling chamber (10) comprises a passage wall (25) and a liquid supply line (14), especially a nozzle (15), and a liquid outlet (15) and wherein liquid is supplied via the liquid supply line (14), especially the nozzle, to a working zone (16) of the dental machine tool (1), on which a milling tool (18) is processing a workpiece (20), and wherein the workpiece (20) can be mounted on the workpiece arm (22) so as to be movable in at least two spatial directions, wherein the workpiece arm (22) passes through a movement flange (24) at which the workpiece arm (22) passes through the passage wall (25) of the milling chamber (10) and wherein the passage wall (25) comprises a membrane (26), which allows movement of the workpiece arm (22) in at least two spatial directions and consists of a highly elastic material, wherein the membrane (26) is clampingly held in a sealed manner on the passage wall (25) of the milling chamber (10) using a circumferentially formed connecting flange (29).

2. The dental machine tool according to claim 1, **characterized in that** the membrane (26) comprises undulations (28), the undulations (28) being formed as concentric circles or as concentric semi-circles substantially forming sinusoidal curves, as viewed in cross section.

3. The dental machine tool according to claim 2, **characterized in that** at least two and at most twenty undulations (28) of the membrane (26) extend radially outwardly, as viewed from the direction of the movement flange (24).

4. The dental machine tool according to one of the preceding claims, **characterized in that** the movement flange (24) of the workpiece arm (22) is formed on a rigid semi-arm (22a) of the workpiece arm (22) which passes through the membrane (26).

5. The dental machine tool according to one of the preceding claims, **characterized in that** the workpiece arm (22), beyond the passage wall (25), i.e. outside the milling chamber (10), comprises movement elements (32) in three spatial directions, corresponding to the axes X, Y, Z and two axes of rotation for rotation of a tool chuck (34) or a collet chuck for the workpiece (20), optionally together with the workpiece (20) being clamped therein.

6. The dental machine tool according to one of the preceding claims, **characterized in that** a milling spindle (35) is provided in the milling chamber (10), which is arranged in a stationary manner carrying a tool chuck (34), which carries a milling tool (18) clamped in a manner known per se, which milling spindle (35) is fastened especially to the bottom wall (36) of the milling chamber (10).

7. The dental machine tool according to one of the preceding claims, **characterized in that** the liquid supply line (14) comprises at least one nozzle which is arranged obliquely to the extension of the membrane (26) in the outflow direction.

8. The dental machine tool according to one of the preceding claims, **characterized in that** the liquid supply line (14) comprises a plurality of nozzles the outflow directions of which are essentially parallel to each other and especially converge, and **in that** the liquid is supplied to the working zone and is fed to the milling tool (18) and/or to the workpiece (20) therein during machining before the liquid can reach the membrane (26).

9. The dental machine tool according to one of the preceding claims, **characterized in that** a milling spindle (35) is provided which carries a chuck (34) for a milling tool (18), and that a nozzle plate connected to the dental machine tool carries at least one nozzle for the liquid supply (14) to the milling zone (10), which nozzle rotates with the chuck (34).

10. The dental machine tool according to claim 9, **characterized in that** a plurality of nozzles are arranged uniformly distributed on the chuck (34) around the milling tool (18), the outflow direction of which extends substantially parallel to the milling tool (18) or is directed towards the tip (18a) of the milling tool (18).

11. The dental machine tool according to one of the preceding claims, **characterized in that** the sealed door (12) is arranged on a wall surface (10a) of the milling chamber (10), preferably on a ceiling wall (38) of the milling chamber (10), wherein the sealed door (12) is configured such that change of the milling tool (18) can be carried out using a tool changer (39) arranged beyond the wall surface (10a) of the milling chamber (10), i.e. outside the milling chamber (10), in the opened state of the door (12).

12. The dental machine tool according to claim 11, **characterized in that** the sealed door (12) comprises a plate-shaped element (40) arranged on the wall surface (10a) of the milling chamber (10), preferably on the ceiling wall (38) of the milling chamber (10), wherein the plate-shaped element (40) covers an opening (42) formed in the wall surface (10a) of the milling chamber (10), preferably in the ceiling wall (38) of the milling chamber (10), in the closed state of the door (12), wherein the opening (42) and/or the door (12) has at least one sealing element (44).

13. The dental machine tool according to claims 11 or 12, **characterized in that** the door (12) is controllable such that the door (12) is openable when the tool changer (39) and/or the workpiece changer is actuated and is closable after the milling tool (18) has been changed.

14. The dental machine tool according to one of the preceding claims, **characterized in that** the membrane (26) is of semi-circular shape at least in sections, the membrane (26) having a first section (26a) of semi-circular shape, an, essentially rectilinear, second section (26b) arranged adjacent to a first axial end section (26a1) of the semi-circular first section (26a) of the membrane (26) and a, substantially rectilinear, third section (26c) arranged adjacent to a second axial end section (26a2) of the semi-circular first section (26a) of the membrane (26).

## Revendications

1. Machine d'usinage dentaire (1) avec un bras porte-pièce (22) et avec un espace de fraisage (10) qui présente au moins une porte étanche (12) et qui est étanche par rapport à l'environnement (13) contre la sortie de liquide, où l'espace de fraisage (10) présente une paroi de passage (25) et une conduite d'amenée de liquide (14), en particulier une buse, et une sortie de liquide (15), et où du liquide peut être amené par la conduite d'amenée de liquide (14), en particulier la buse, à une zone de travail (16) de la machine d'usinage dentaire (1), où un outil de fraisage (18) usine une pièce à usiner (20), et où la pièce à usiner (20) peut être montée sur le bras porte-pièce (22) de manière à pouvoir être déplacée dans au moins deux directions spatiales, où le bras porte-pièce (22) traverse une bride de déplacement (24) au niveau de laquelle le bras porte-pièce (22) traverse la paroi de passage (25) de l'espace de fraisage (10) et où la paroi de passage (25) présente une membrane (26), qui permet un mouvement du bras porte-pièce (22) dans au moins deux directions spatiales et qui est constituée d'un matériau hautement élastique, où la membrane (26) est maintenue serrée de manière étanche sur la paroi de passage (25) de l'espace de fraisage (10) avec une bride de raccordement (29) qui est réalisée de manière périphérique.

2. Machine d'usinage dentaire selon la revendication 1, **caractérisée en ce que** la membrane (26) présente des ondulations (28), où les ondulations (28) sont réalisées sous forme de cercles concentriques ou de cercles partiels concentriques qui, vus en coupe transversale, forment essentiellement des courbes sinusoïdales.

3. Machine d'usinage dentaire selon la revendication 2, **caractérisée en ce qu'**au moins deux et au plus vingt ondulations (28) de la membrane (26) s'étendent radialement vers l'extérieur, vues depuis la direction de la bride de mouvement (24).

4. Machine d'usinage dentaire selon l'une des revendications précédentes, **caractérisée en ce que** la bride de déplacement (24) du bras porte-pièce (22) est formée sur un bras partiel rigide (22a) du bras porte-pièce (22) qui traverse la membrane (26).

5. Machine d'usinage dentaire selon l'une des revendications précédentes, **caractérisée en ce que** le bras porte-pièce (22) comporte, au-delà de la paroi de passage (25), donc en dehors de l'espace de fraisage (10), des éléments de déplacement (32) dans trois directions de l'espace, correspondant aux axes X, Y, Z et à deux axes de rotation pour la rotation d'un mandrin de serrage d'outil (34) ou d'une pince de serrage pour la pièce à usiner (20), le cas échéant ensemble avec la pièce (20) qui y est serrée.

6. Machine d'usinage dentaire selon l'une des revendications précédentes, **caractérisée en ce qu'**une broche de fraisage (35) est prévue dans l'espace de fraisage (10), disposée de manière fixe et portant un mandrin de serrage d'outil (34), qui à son tour porte de manière connue en soi un outil de fraisage (18) serré, et cette broche de fraisage (35) est fixée en particulier sur la paroi de fond (36) de l'espace de fraisage (10).

7. Machine de traitement dentaire selon l'une des revendications précédentes, **caractérisée en ce que** la conduite d'amenée de liquide (14) présente au moins une buse qui est disposée en oblique par rapport à l'extension de la membrane (26) dans le sens de l'écoulement.

8. Machine d'usinage dentaire selon l'une des revendications précédentes, **caractérisée en ce que** la conduite d'amenée de liquide (14) comporte plusieurs buses dont les directions d'écoulement sont sensiblement parallèles entre elles et notamment convergentes, et **en ce que** le liquide est amené à la zone d'usinage et y rencontre l'outil de fraisage (18) et/ou la pièce à usiner (20) pendant l'usinage, avant que le liquide puisse atteindre la membrane (26).

9. Machine d'usinage dentaire selon l'une des revendications précédentes, **caractérisée** en ce en ce qu'une broche de fraisage (35) est prévue, qui porte un mandrin (34) pour un outil de fraisage (18), et en ce qu'une plaque à buses reliée à la machine d'usinage dentaire porte au moins une buse pour l'amenée de liquide (14) dans la chambre de fraisage (10), qui tourne avec le mandrin (34).

10. Machine d'usinage dentaire selon la revendication 9, **caractérisée en ce que** plusieurs buses sont réparties uniformément sur le mandrin (34) autour de l'outil de fraisage (18), dont la direction d'écoulement s'étend sensiblement parallèlement à l'outil de fraisage (18) ou est dirigée vers la pointe (18a) de l'outil de fraisage (18).

11. Machine d'usinage dentaire selon l'une des revendications précédentes, **caractérisée en ce que** la porte étanche (12) est disposée sur une surface de paroi (10a) du compartiment de fraisage (10), de préférence sur une paroi de plafond (38) du compartiment de fraisage (10), où la porte étanche (12) est conçue de telle sorte qu'au moyen d'un changeur d'outil (39) disposé de l'autre côté de la surface de paroi (10a) de l'espace de fraisage (10), donc à l'extérieur de l'espace de fraisage (10), un changement de l'outil de fraisage (18) peut être effectué lorsque la porte (12) est ouverte.

12. Machine de traitement dentaire selon la revendication 11, **caractérisée en ce que** la porte étanche (12) présente un élément en forme de plaque (40) disposé sur la surface de paroi (10a) de l'espace de fraisage (10), de préférence sur la paroi de plafond (38) de l'espace de fraisage (10), où l'élément en forme de plaque (40) recouvre une ouverture (42) formée dans la surface de paroi (10a) de l'espace de fraisage (10), de préférence dans la paroi de plafond (38) de l'espace de fraisage (10), à l'état fermé de la porte (12), où l'ouverture (42) et/ou la porte (12) présente au moins un élément d'étanchéité (44).

13. Machine d'usinage dentaire selon la revendication 11 ou 12, **caractérisée en ce que** la porte (12) peut être commandée de telle manière à pouvoir être ouverte lors de l'actionnement du changeur d'outil (39) et/ou du changeur de pièce et à pouvoir être fermée après l'exécution du changement de l'outil de fraisage (18).

14. Machine d'usinage dentaire selon l'une des revendications précédentes, **caractérisée en ce que** la membrane (26) est réalisée au moins par sections en forme de cercle partiel, où la membrane (26) présente une première section (26a) réalisée en forme de cercle partiel, un deuxième tronçon (26b) de forme sensiblement rectiligne disposé de manière adjacente à un premier tronçon d'extrémité axial (26a1) du premier tronçon (26a) de la membrane (26) réalisé en forme de cercle partiel, et un troisième tronçon (26c) de forme sensiblement rectiligne, disposée de manière adjacente à un deuxième tronçon d'extrémité axiale (26a2) de la première partie (26a) de la membrane (26) en forme de cercle partiel.
